# EUROPÄISCHE PATENTSCHRIFT

(11) **EP 1 839 388 B1**
(45) Veröffentlichungstag und Bekanntmachung des Hinweises auf die Patenterteilung: **09.07.2008**
(21) Anmeldenummer: 06706257.0
(22) Anmeldetag: 17.01.2006
(51) Int. Cl.: H02P 6/00, H02P 6/14, H02M 7/00, H01L 27/01

(54) **STEUERSCHATUNG FÜR EINEN ELEKTRONISCH KOMMUTIERTEN MOTOR**
CONTROL CIRCUIT FOR AN ELECTRONICALLY COMMUTED MOTOR
CIRCUIT DE COMMANDE POUR MOTEUR A COMMUTATION ELECTRONIQUE

(30) Priorität: 20.01.2005 DE 102005004067
(43) Veröffentlichungstag der Anmeldung: 03.10.2007
(73) Patentinhaber: ebm-papst St. Georgen GmbH & Co. KG, 78112 St. Georgen (DE)
(72) Erfinder: BERROTH, Hansjörg, 78052 VS-Obereschach (DE); JESKE, Frank, 78112 St. Georgen (DE); MAUCH, Volker, 78655 Dunningen (DE); KUNER, Arnold, 78112 St. Georgen (DE)
(74) Vertreter: Raible, Tobias
(86) Internationale Anmeldenummer: PCT/EP2006/000353
(87) Internationale Veröffentlichungsnummer: WO 2006/077069

(56) Entgegenhaltungen:
- US-A1- 2004 056 617
- US-A1- 2004 208 032
- US-B1- 6 288 507

## Beschreibung

Die Erfindung betrifft eine Steuerschaltung für einen elektronisch kommutierten Motor, welcher insbesondere zum Antrieb kleiner Lüfter verwendbar ist.

Zum Antrieb kleiner Lüfter werden häufig elektronisch kommutierte Motoren (ECM) mit zweisträngigen Treiberschaltungen ohne Strombegrenzung verwendet, welche eine vorgegebene Leistungsdichte aufweisen. Eine Erhöhung der Leistungsdichte eines ECM wird in der Regel durch eine Verbesserung des Wirkungsgrads erzielt. Je besser der Wirkungsgrad ist, umso niederohmiger kann in der Regel der Widerstand der Motorwicklung des ECM gewählt werden. Dies führt jedoch zu einem Vielfachen des Anlauf- und Blockierstromes des ECM gegenüber dem Mittelwert des Betriebsstromes. Um hierbei eine Überlastung des ECM zu verhindern, müssen bei der Erhöhung der Leistungsdichte eines ECM entsprechende Strombegrenzungsmaßnahmen ergriffen werden.

Die Anwendung üblicher Strombegrenzungsmaßnahmen auf zweisträngige Lüftermotoren erfordert jedoch die Verwendung eines Elektrolytkondensators (Elko) im Zwischenkreis, welcher im getakteten Betrieb dafür sorgt, dass die Spannung am Zwischenkreis durch die Freilaufströme in der Endstufe in vertretbaren Grenzen gehalten wird. Elkos weisen jedoch in der Regel nur eine beschränkte Lebensdauer auf und sind im notwendigen Kapazitätsbereich konstruktiv nur schwer unterzubringen. Darüber hinaus sind Elkos im notwendigen Abmessungsbereich ausschließlich in bedrahteter Bauform erhältlich und können bei Verwendung von Voll-SMD (Surface Mounted Device)- Leiterplatten nicht im Reflow-Lötprozess auf den Leiterplatten angeordnet werden.

Aufgabe der vorliegenden Erfindung ist es, eine neue Steuerschaltung für einen als Antrieb eines kleinen Lüfters verwendbaren ECM bereitzustellen. Diese Aufgabe wird durch eine Steuerschaltung nach Anspruch 1 gelöst.

Der Erfindung liegt die Erkenntnis zugrunde, dass eine Strombegrenzung für einen, ECM, welcher insbesondere zum Antrieb kleiner Lüfter verwendbar ist, unter Verwendung einer vergleichsweise einfachen und kostengünstigen Steuerschaltung erreicht werden kann. Diese Steuerschaltung wird erfindungsgemäß mit der Endstufe des ECM verschaltet und umfasst vorzugsweise ein Strommessglied und ein Motorstromstellglied. Das Strommessglied stellt eine vom Motorstrom abhängige Motorstromführungsgröße bereit. Das Motorstromstellglied beeinflusst in Abhängigkeit von der Motorstromführungsgröße Kommutierungssignale zur Ansteuerung der Endstufe. Dies ermöglicht eine Begrenzung des Motorstroms insbesondere beim Anlaufen und Blockieren des ECM. Die Erfindung ist hierbei jedoch nicht auf einen bestimmten Motorentyp beschränkt. Die Verwendung von Shunt-Wirderständen zur Strommessung wird z.B. in US 6288507 beschrieben.

Ein Grundgedanke der Erfindung besteht darin, dass eine entsprechende Beschaltung der Endstufe Spannungsspitzen im Zwischenkreis und eine daraus resultierende Belastung der Endstufe und der elektro-magnetischen Verträglichkeit in Grenzen hält und eine mögliche unangenehme Körperschallanregung verringert. Hierzu umfasst die Steuerschaltung gemäß einer bevorzugten Ausführungsform der vorliegenden Erfindung eine Fußpunktdiode, welche in Reihe mit dem Strommessglied und zwischen dem Strommessglied und mindestens zwei Halbleiterschaltern der Endstufe angeordnet ist. Jeder Halbleiterschalter ist mit einer zugehörigen Statorwicklung des ECM verbunden. Wird ein erster Wicklungsstrang des ECM über ein entsprechendes Abschaltsignal sehr schnell abgeschaltet, so steigt die Spannung im Strang und somit an dem zugehörigen Halbleiterschalter durch die in dem Strang noch vorhandene Energie stark an. Durch den Spannungsanstieg in dem ersten Wicklungsstrang wird über die transformatorische Kopplung der bifilaren Wicklung eine entgegengesetzte Spannung in einem entsprechenden zweiten Wicklungsstrang erzeugt. Die entgegengesetzte Spannung bewirkt einen Stromfluss über die internen Freilaufdioden, welche den mindestens zwei Halbleiterschaltern zugeordnet sind, in den Zwischenkreis. Damit dieser Stromfluss nicht zu großen Spannungsspitzen im Zwischenkreis und zu einer erhöhten Belastung der Halbleiterschalter der Endstufe führt, bewirkt die Fußpunktdiode ein verlangsamtes Abschalten des ersten Halbleiterschalters, welcher somit nach Empfang des Abschaltsignals noch kurzzeitig im linearen Zustand gehalten wird. Hierdurch werden die Spannungsspitzen im Zwischenkreis und auch die Ströme über die Freilaufdioden in den Zwischenkreis stark eingedämmt.

Gegenüber bekannten Lösungsansätzen kann somit in einem Ausführungsbeispiel der ansonsten im Zwischenkreis benötigte Elko auf einen im 100 nF-Bereich liegenden SMD-Keramikkondensator reduziert werden. Dies ermöglicht gemäß einer bevorzugten Ausführungsform der vorliegenden Erfindung eine Realisierung einer Steuerschaltung auf einer Voll-SMD-Leiterplatte, deren Bestückung komplett im Reflow-Lötprozess erfolgen kann.

Gemäß weiteren bevorzugten Ausführungsformen der vorliegenden Erfindung ist die Fußpunktdiode derart geschaltet, dass kein Strom von Masse GND in den Gleichstromzwischenkreis fließen kann. Des Weiteren sind die mindestens zwei Halbleiterschalter der Endstufe vorzugsweise als Feldeffekttransistoren ausgebildet, wobei jeweils der Source-Anschluss mit der Fußpunktdiode und der Drain-Anschluss mit einer zugehörigen Statorwicklung des ECM verbunden sind. Zwischen dem Gate-Anschluss und dem Drain-Anschluss jedes der mindestens zwei Feldeffekttransistoren ist ein R/C-Glied vorgesehen. Die RIC-Glieder verlangsamen das Abschalten der Halbleiterschalter und flachen die steilen Schaltflanken der Abschaltsignale ab.

Weitere Einzelheiten und vorteilhafte Weiterbildungen der Erfindung ergeben sich aus den im Folgenden beschriebenen und in den Zeichnungen dargestellten Ausführungsbeispielen. Es zeigt:
- Fig. 1: ein Blockdiagramm einer Vorrichtung mit einer Steuerschaltung zur Strombegrenzung für einen ECM gemäß der Erfindung,
- Fig. 2: ein vereinfachtes Schaltbild einer Vorrichtung mit einer Steuerschaltung zur Strombegrenzung für einen ECM gemäß einer Ausführungsform der Erfindung,
- Fig. 3: ein vereinfachtes Schaltbild einer Vorrichtung mit einer Steuerschaltung zur Strombegrenzung für einen ECM gemäß einer alternativen Ausführungsform der Erfindung,
- Fig. 4: ein vereinfachtes Schaltbild einer Steuerung gemäß einer Ausführungsform der Erfindung.

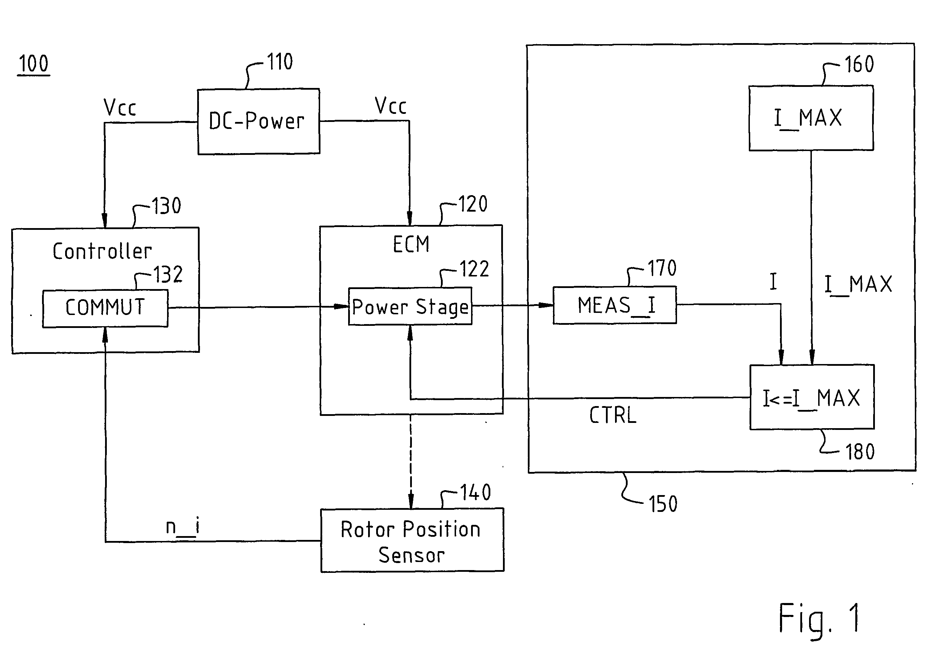

**Fig. 1** zeigt ein Blockdiagramm, welches die prinzipielle Funktionsweise einer Vorrichtung 100 zum Betrieb eines ECM 120 gemäß der vorliegenden Erfindung illustriert. Die erfindungsgemäße Vorrichtung 100 ist dazu ausgebildet, den Motorstrom des ECM 120 insbesondere beim Anlaufen und Blockieren des ECM 120 zu begrenzen. Hierdurch können ein Auftreten von Spitzenströmen in der Motorwicklung des ECM 120 und somit eine Überbelastung einzelner Komponenten der Vorrichtung 100 eingeschränkt werden.

Gemäß einer Ausführungsform der vorliegenden Erfindung umfasst die Vorrichtung 100 eine Gleichspannungsquelle 110 (DC-Power), welche mit dem ECM 120 und einer Steuerung 130 (Controller) verbunden ist. Die Steuerung 130 umfasst eine Kommutierungssteuerung 132 (COMMUT), welche eingangsseitig mit mindestens einem Hallgenerator bzw. Rotorstellungssensor 140 (Rotor Position Sensor) verbunden ist. Der mindestens eine Hallgenerator 140 ist dem ECM 120 zugeordnet. Die Kommutierungssteuerung 132 erzeugt Kommutierungssignale für eine Endstufe 122 (Power Stage) des ECM 120 in Abhängigkeit von Hallsignalen, welche von dem mindestens einen Hallgenerator 140 bereitgestellt werden. Die Endstufe 122 ist mit einer Steuerschaltung 150 zur Begrenzung des Motorstroms des ECM 120 verbunden. Die Steuerschaltung 150 umfasst ein Strommessglied 170 (MEAS_I), einen Motorstromgrenzwertgeber 160 (I_MAX) und ein Motorstromstellglied 180 (I <= I_MAX). Erfindungsgemäß ist die Endstufe 122 ausgangsseitig über das Strommessglied 170 mit dem Motorstromstellglied 180 verbunden. Das Motorstromstellglied 180 ist eingansseitig des Weiteren mit dem Motorstromgrenzwertgeber 160 verbunden. Ausgangsseitig ist das Motorstromstellglied 180 zu der Endstufe 122 des ECM 120 zurück gekoppelt, um die von der Kommutierungssteuerung 132 bereitgestellten Kommutierungssignale in Abhängigkeit von einer von dem Strommessglied 170 bereitgestellten Motorstromführungsgröße zu beeinflussen.

Im Betrieb der Vorrichtung 100 erzeugt die Gleichspannungsquelle 110 eine Versorgungsspannung Vcc, welche auch als Betriebsspannung +U_B bezeichnet wird. Die Versorgungsspannung Vcc wird einerseits dem ECM 120 und andererseits der Steuerung 130 zugeführt. Der ECM 120 wandelt die Versorgungsspannung Vcc in Drehungen mit einer bestimmten Drehzahl um. Hierbei kann ein Drehzahl-Istwert mittels des dem ECM 120 zugeordneten mindestens einen Hallgenerators 140 bestimmt werden. Vorzugsweise wird hierzu aus den Hallsignalen des ECM 120 ein analoges, drehzahlabhängiges Signal n_i (Drehzahlistwertgröße) erzeugt, welches den Drehzahl-Istwert des ECM 120 repräsentiert. In Abhängigkeit von der Drehzahlistwertgröße n_i erzeugt die Kommutierungssteuerung 132 die Kommütierungssignale zur Ansteuerung der Endstufe 122 des ECM 120.

Gemäß einer bevorzugten Ausführungsform der vorliegenden Erfindung werden die Kommutierungssignale von dem Motorstromstellglied 180 zur Begrenzung des Motorstroms des ECM 120 beeinflusst. Hierzu wird dem Motorstromstellglied 180 ein Motorstromgrenzwert I_MAX von dem Motorstromgrenzwertgeber 160 zugeführt. Der Motorstromgrenzwert I_MAX ist ein veränderbarer Wert, welcher in Abhängigkeit von einer entsprechenden Ausgestaltung der Vorrichtung 100 einstellbar ist. Des Weiteren wird dem Motorstromstellglied 180 von dem Strommessglied 170 eine vom Motorstrom abhängige Motorstromführungsgröße I zugeführt. Das Motorstromstellglied 180 vergleicht den Motorstromgrenzwert I_MAX mit der Motorstromführungsgröße I oder einer daraus abgeleiteten Größe und erzeugt ein Steuersignal CTRL. Das Steuersignal CTRL wird der Endstufe 122 zugeführt, um die Kommutierungssignale zur Ansteuerung der Endstufe 122 in Abhängigkeit von der Motorstromführungsgröße I zu beeinflussen.

Somit wird gemäß der vorliegenden Erfindung der Motorstrom des ECM 120 dadurch begrenzt, dass die Kommutierungssignale zur Ansteuerung der Endstufe 122 in Abhängigkeit von einer dynamisch von dem Motorstrom abgeleiteten Motorstromführungsgröße I beeinflusst werden. Insbesondere wird der Motorstrom gemäß einer Ausführungsform der Erfindung dynamisch begrenzt für den Fall, dass die Motorstromführungsgröße I den Motorstromgrenzwert I_MAX überschreitet. Derartige Überschreitungen treten u.a. beim Anlaufen oder Blockieren des ECM 120 aufgrund von Spitzenströmen in der Motorwicklung des ECM 120 auf. Somit ist die erfindungsgemäße Begrenzung des Motorstroms insbesondere zur Begrenzung des Motorstroms beim Anlaufen und Blockieren des ECM 120 zur Reduzierung der auftretenden Spitzenströme geeignet.

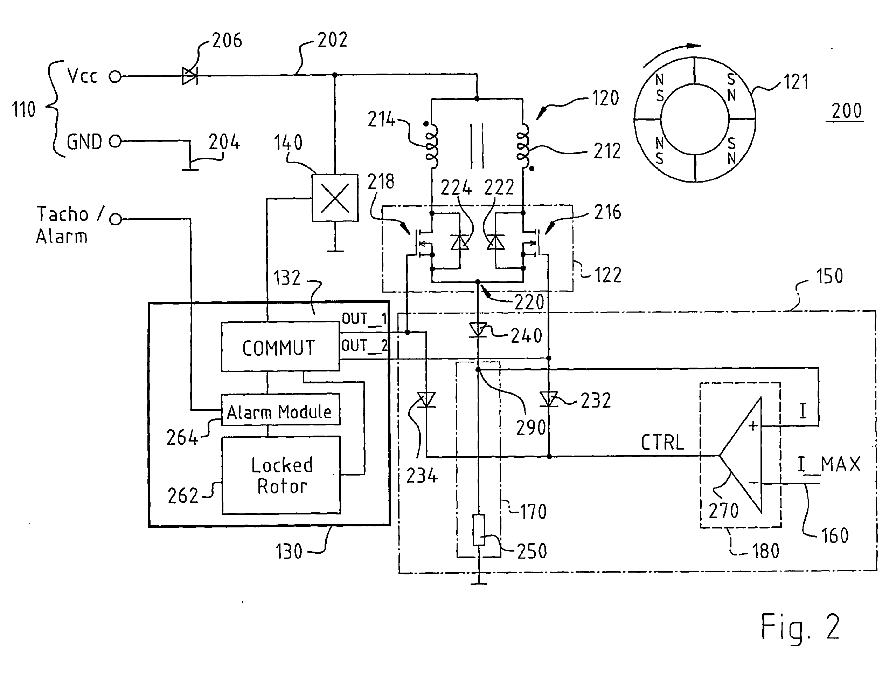

**Fig. 2** zeigt ein vereinfachtes Schaltbild einer beispielhaften Schaltung 200, mit welcher die Vorrichtung 100 zum Betrieb des ECM 120 von Fig. 1 gemäß einer ersten Ausführungsform realisiert wird. Dementsprechend umfasst die beispielhafte Schaltung 200 eine Vielzahl von Bauelementen, welche die Gleichspannungsquelle 110, den ECM 120 mit der Endstufe 122 und dem mindestens einen zugeordneten Hallgenerator 140, die Steuerung 130 mit der Kommutierungssteuerung 132 und die Steuerschaltung 150 mit dem Motorstromgrenzwertgeber 160, dem Strommessglied 170 und dem Motorstromstellglied 180 ausbilden.

In der beispielhaften Schaltung 200 umfasst die Gleichspannungsquelle 110 einen Pluspol Vcc, welcher mit einer Plusleitung 202 verbunden ist, und einen Minuspol GND, welcher mit einer Minusleitung 204 verbunden ist. Der Pluspol Vcc ist über die Plusleitung 202 mit der Anodenseite einer Gleichrichterdiode 206 verbunden. Die Kathodenseite der Gleichrichterdiode 206 ist einerseits über den mindestens einen Hallgenerator 140 mit Masse und andererseits mit einem Ende jedes Motorstrangs des ECM 120 verbunden. Der ECM 120 ist beispielhaft als zweisträngiger Gleichstrommotor mit zwei Motorsträngen 212 und 214 dargestellt. Dementsprechend ist die Kathodenseite der Gleichrichterdiode 206 mit einem Ende des Motorstrangs 212 und mit einem Ende des Motorstrangs 214 verbunden. Das andere Ende des Motorstrangs 212 ist mit einem Halbleiterschalter 216 der Endstufe 122 verbunden und das andere Ende des Motorstrangs 214 ist mit einem Halbleiterschalter 218 der Endstufe 122 verbunden.

Wie in Fig. 2 illustriert ist, werden die Halbleiterschalter 216 und 218 gemäß einer bevorzugten Ausführungsform mit Feldeffekttransistoren vom Typ MOSFET realisiert. Hierbei sind diejenigen Enden der Motorstränge 212 und 214, welche mit den Halbleiterschaltern verbunden sind, jeweils an die Drain-Bereiche der MOSFETs angeschlossen. Die jeweiligen Source-Bereiche der MOSFETs sind über einen Fußknotenpunkt 220 miteinander verbunden. Der Source-Bereich des MOSFET 216 ist mit der Anodenseite einer Freilaufdiode 222 verbunden, und der Drain-Bereich des MOSFET 216 ist mit der Kathodenseite der Freilaufdiode 222 verbunden. Der Source-Bereich des MOSFET 218 ist mit der Anodenseite einer Freilaufdiode 224 verbunden, und der Drain-Bereich des MOSFET 218 ist mit der Kathodenseite der Freilaufdiode 224 verbunden. Des Weiteren ist das Gate des MOSFET 216 einerseits mit der Kommutierungssteuerung 132 und andererseits mit der Anodenseite einer Diode 232 verbunden. Das Gate des MOSFET 218 ist einerseits ebenfalls mit der Kommutierungssteuerung 132 und andererseits mit der Anodenseite einer Diode 234 verbunden. Die Kathodenseiten der Dioden 232 und 234 sind an den Ausgang eines Operationsverstärkers 270 angeschlossen. Der Fußknotenpunkt 220 ist weiterhin mit der Anodenseite einer Fußpunktdiode 240 verbunden. Die Kathodenseite der Fußpunktdiode 240 ist über einen Knotenpunkt 290 einerseits über einen Shuntwiderstand 250 mit Masse und andererseits mit dem nicht-invertierenden Eingang des Operationsverstärkers 270 verbunden. Der invertierende Eingang des Operationsverstärkers ist mit dem Motorstromgrenzwertgeber 160 verbunden, welcher erfindungsgemäß mit einer Bezugsspannungsquelle realisiert wird.

Die Kommutierungssteuerung 132 ist eingangsseitig mit dem Hallgenerator 140 und einer Blockierschutzeinheit 262 verbunden. Ausgangsseitig ist die Kommutierungssteuerung 132 einerseits, wie oben beschrieben, mit den Gate-Bereichen der MOSFETs 216 und 218, und andererseits mit einem Alarmmodul 264 verbunden. Das Alarmmodul 264 ist mit einem Tacho/Alarm-Ausgang verbunden, an welchem ein Tacho- bzw. Alarmsignal bereitgestellt wird. Erfindungsgemäß ist die Blockierschutzeinheit 262 dazu ausgebildet, über Rotorstellungssignale, welche aus den Hallsignalen des ECM 120 abgeleitet werden können, zu ermitteln, ob der ECM 120 blockiert ist. Das Alarmmodul 264 ist dazu ausgebildet, ein Alarmsignal auszugeben, wenn der Rotor des ECM 120 stehen bleibt bzw. blockiert ist, da in diesem Fall die MOSFETs bzw. die Motorwicklung durch Wärmebildung thermisch zerstört oder zumindest beschädigt werden können. Des Weiteren ist das Alarmmodul 264 dazu ausgebildet, ein Tachosignal auszugeben, welches die Rotorstellung anzeigt.

Im Betrieb der Vorrichtung 200 stellt die Gleichspannungsquelle 110 eine Versorgungsspannung Vcc über die Plusleitung 202 bereit. Die Versorgungsspannung Vcc ist vorzugsweise eine im Wesentlichen konstante Gleichspannung, welche von einem Netzgerät oder einer Batterie erzeugt wird. Die Gleichrichterdiode 206 bildet einen Verpolschutz für den ECM 120. Somit ist die Gleichrichterdiode 206 nur leitend für eine Versorgungsspannung Vcc mit einer korrekten Polarität, wobei negative Spannungsstörungen in der Versorgungsspannung Vcc blockiert werden. Der ECM 120 wandelt die Versorgungsspannung Vcc unter Verwendung der Motorstränge 212 und 214 in eine Drehung eines Rotors 121, beispielsweise eines permanentmagnetischen Rotors, um. Hierbei kann ein Drehzahl-Istwert des Rotors 121 mittels des mindestens einen Hallgenerators 140, welcher dem ECM 120 zugeordnet ist, bestimmt werden. Hierzu werden entsprechende von dem mindestens einen Hallgenerator 140 erzeugte Hallsignale der Kommutierungssteuerung 132 zugeführt.

Die Kommutierungssteuerung 132 erzeugt in Abhängigkeit von dem Drehzahl-Istwert, oder einer daraus abgeleiteten Größe, Kommutierungssignale OUT_1 und OUT_2 zur Ansteuerung der Endstufe 122, welche beispielhaft mit den MOSFETs 216 und 218 realisiert wird. Die Kommutierungssignale OUT_1 und OUT_2 werden den Gate-Bereichen der MOSFETs 216 und 218 zugeführt, um unter Verwendung der MOSFETs 216 und 218 die durch die Motorstränge 212 und 214 fließenden Ströme zu steuern, um ein wechselndes Magnetfeld zum Antrieb des Rotors zu erzeugen. Insbesondere können die Motorströme hierbei derart kommutiert werden, dass sich der Rotor des ECM 120 mit einer vorgegebenen Drehzahl dreht.

Zur Kommutierung der Motorströme werden die MOSFETs 216 und 218 je nach Bedarf durch entsprechende Kommutierungssignale OUT_1 bzw. OUT_2 ein- oder ausgeschaltet, wodurch die den MOSFETs zugeordneten Motorstränge 212 und 214 ebenfalls entsprechend an- oder abgeschaltet werden. Wird nun beispielsweise der Motorstrang 212 über ein entsprechendes Abschaltsignal sehr schnell abgeschaltet, so steigt die Spannung in dem Motorstrang 212 und somit an dem zugehörigen MOSFET 216 durch die in dem Motorstrang 212 noch vorhandene Energie stark an. Durch den Spannungsanstieg in dem Motorstrang 212 wird über die transformatorische Kopplung der bifilaren Wicklung eine entgegengesetzte Spannung in den Motorstrang 214 induziert. Diese entgegengesetzte Spannung bewirkt einen Stromfluss über die internen Freilaufdioden 222 und 224, welche den MOSFETs 216 und 218 zugeordnet sind, in den Zwischenkreis. Damit dieser Stromfluss nicht zu großen Spannungsspitzen im Zwischenkreis und zu einer erhöhten Belastung der MOSFETs 216 und 218 führt, bewirkt nun die Fußpunktdiode 240 ein negatives Potential am Fußknotenpunkt 220, sodass kein Strom von Masse (GND) nach Vcc fließen kann. Somit bewirkt die Fußpunktdiode 240 ein verlangsamtes Abschalten des MOSFET 216, welcher nach Empfang des Abschaltsignals noch kurzzeitig im linearen Zustand gehalten wird. Hierdurch werden die Spannungsspitzen im Zwischenkreis und auch die Ströme über die Freilaufdioden 222 und 224 in den Zwischenkreis beim Abschalten der Motorstränge 212 und 214 verringert. Durch die Verringerung der Spannungsspitzen wird ebenfalls eine Belastung der Endstufe eingeschränkt, die elektromagnetische Verträglichkeit wird verbessert und unangenehme Motorgeräusche werden verringert.

Dennoch können durch die erfindungsgemäß mögliche hohe Leistung des ECM 120 und die gemäß einer bevorzugten Ausführungsform sehr niederohmig ausgestalteten Motorwicklung 212, 214 beim Anlaufen und Blockieren des ECM 120 extrem große Motorströme fließen, welche eine große Belastung für die MOSFETs 216 und 218 und die Stromversorgung der Motorstränge 212 und 214 darstellen würden. Hier greift die erfindungsgemäße Strombegrenzung.

Gemäß einer Ausführungsform der vorliegenden Erfindung fließt der tatsächliche Motorstrom, d.h. die Wicklungsströme in den Motorsträngen 212 und 214, über die Fußpunktdiode 240 und den Shuntwiderstand 250 nach Masse. Hierbei bilden der Shuntwiderstand 250 und der Knotenpunkt 290 das Strommessglied 170, wobei über dem Shuntwiderstand 250, d.h. an dem Knotenpunkt 290, eine Spannung abgegriffen wird, welche unmittelbar von dem Motorstrom abhängig ist. Diese Spannung wird zur Bestimmung des Istwerts des Motorstroms verwendet, welcher als Motorstromführungsgröße I dem nicht-invertierenden Eingang des Operationsverstärkers 270 zugeführt wird. Wie bereits oben beschrieben wurde, wird dem invertierenden Eingang des Operationsverstärkers 270 von dem Motorstromgrenzwertgeber 160 ein frei wählbarer Motorstromgrenzwert I_MAX zugeführt.

Der Operationsverstärker 270 bildet das Motorstromstellglied 180 und wird gemäß einer bevorzugten Ausführungsform der Erfindung als Komparator betrieben. Dementsprechend vergleicht der Operationsverstärker 270 die Motorstromführungsgröße I, oder eine daraus abgeleitete Größe, mit dem vorgegebenen Motorstromgrenzwert I_MAX. Für den Fall, dass die Motorstromführungsgröße I den vorgegebenen Motorstromgrenzwert I_MAX überschreitet, beeinflusst der Operationsverstärker 270 die Kommutierungssignale OUT_1 und OUT_2 über die Dioden 232 und 234 mit einem Steuersignal CTRL. Dieses Steuersignal bewirkt, dass die MOSFETs 216 und 218 ausgeschaltet werden, wodurch eine Begrenzung des Motorstroms erreicht wird. Somit wird die Belastung der MOSFETs 216 und 218 und der Motorwicklung 212,214 erfindungsgemäß in den extremen Betriebszuständen des Anlaufens und Blockierens des ECM 120 reduziert.

Insbesondere kann gemäß der in Fig. 2 dargestellten Schaltung auf einen Elko im Zwischenkreis verzichtet werden. Dies ermöglicht gemäß einer bevorzugten Ausführungsform der vorliegenden Erfindung eine Realisierung der Steuerschaltung 150 auf einer Voll-SMD-Leiterplatte, deren Bestückung komplett im Reflow-Lötprozess erfolgen kann.

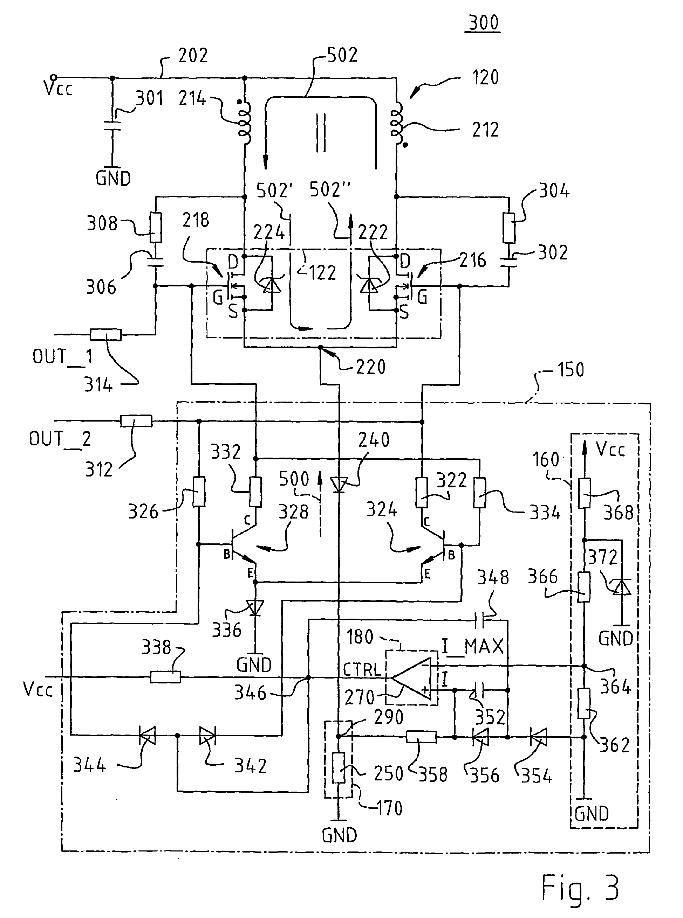

**Fig. 3** zeigt ein vereinfachtes Schaltbild einer beispielhaften Schaltung 300, mit welcher die Vorrichtung 100 zum Betrieb des ECM 120 von Fig. 1 gemäß einer zweiten Ausführungsform realisiert wird. Dementsprechend umfasst auch die beispielhafte Schaltung 300 eine Vielzahl von Bauelementen, welche die Gleichspannungsquelle 110, den ECM 120 mit der Endstufe 122 und dem mindestens einen zugeordneten Hallgenerator 140, die Steuerung 130 mit der Kommutierungssteuerung 132 und die Steuerschaltung 150 mit dem Motorstromgrenzwertgeber 160, dem Strommessglied 170 und dem Motorstromstellglied 180 ausbilden. Hierbei verwendete gleiche bzw. gleich wirkende Bauelemente wie in Fig. 2 sind mit den gleichen Bezugszeichen versehen und werden nicht nochmals erläutert.

In der beispielhaften Schaltung 300 ist die Plusleitung 202 zwischen dem Vcc-Anschluss und dem Motorstrang 214 über einen Zwischenkreiskondensator 301 mit Masse (GND) verbunden. Die Gate- und Drain-Bereiche des MOSFET 216 sind über eine Reihenschaltung aus einem Kondensator 302 und einem Widerstand 304 miteinander verbunden und die Gate- und Drain-Bereiche des MOSFET 218 sind über eine Reihenschaltung aus einem Kondensator 306 und einem Widerstand 308 miteinander verbunden. Dem Gate-Bereich des MOSFET 216 wird das Kommutierungssignal OUT_2 über einen Widerstand 312 zugeführt und dem Gate-Bereich des MOSFET 218 wird das Kommutierungssignal OUT_1 über einen Widerstand 314 zugeführt.

Im Gegensatz zu Fig. 2 sind die Gate-Bereiche der MOSFETs 216 und 218 jedoch nicht mit Dioden verbunden. Vielmehr ist der Gate-Bereich des MOSFET 216 einerseits über einen Widerstand 322 mit dem Kollektor eines NPN-Bipolartransistors 324 und andererseits über einen Widerstand 326 mit der Basis eines NPN-Bipolartransistors 328 verbunden. Entsprechend hierzu ist der Gate-Bereich des MOSFET 218 einerseits über einen Widerstand 332 mit dem Kollektor des NPN-Bipolartransistors 328 und andererseits über einen Widerstand 334 mit der Basis des NPN-Bipolartransistors 324 verbunden. Die Emitter der NPN-Bipolartransistoren 324 und 328 sind mit der Anodenseite eine Diode 336 verbunden, deren Kathodenseite an Masse liegt. Des Weiteren ist die Basis des NPN-Bipolartransistors 324 an die Kathodenseite einer Diode 342 angeschlossen, und die Basis des NPN-Bipolartransistors 328 ist an die Kathodenseite einer Diode 344 angeschlossen. Die Anodenseiten der Dioden 342 und 344 sind über einen Knotenpunkt 346 mit dem Ausgang des Operationsverstärkers 270, einem Widerstand 338 und einer Seite eines Kondensators 348 verbunden. Der Pullup-Widerstand 338 ist mit VCC verbunden. Die andere Seite des Kondensators 348 ist mit einer Seite eines Kondensators 352, der Kathodenseite einer Diode 354 und der Anodenseite einer Diode 356 verbunden. Die andere Seite des Kondensators 352 ist einerseits an den nicht-invertierenden Eingang des Operationsverstärkers 270 angeschlossen. Andererseits ist die andere Seite des Kondensators 352 mit der Kathodenseite der Diode 356 verbunden. Darüber hinaus ist die andere Seite des Kondensators 352 über einen Widerstand 358 mit dem Knotenpunkt 290 verbunden. Die Anodenseite der Diode 354 liegt einerseits an Masse und ist andererseits mit einem Anschluss eines Widerstands 362 verbunden. Der andere Anschluss des Widerstand 362 ist über einen Knotenpunkt 364 einerseits mit dem invertierenden Anschluss des Operationsverstärkers 270 und andererseits über eine Reihenschaltung von zwei Widerständen 366 und 368 mit dem Pluspol Vcc verbunden. Zwischen den beiden Widerständen 366 und 368 ist die Kathodenseite einer Zenerdiode 372 angeschlossen, deren Anodenseite auf Masse liegt.

Im Betrieb der beispielhaften Schaltung 300 bilden die Kondensatoren 302 und 306 mit den jeweils in Reihe dazu geschalteten Widerständen 304 und 308 R/C-Glieder. Diese R/C-Glieder sind dazu ausgebildet, steile Schaltflanken von Abschaltsignalen, d.h. Kommutierungssignalen OUT_1 und OUT_2 zum Abschalten der Motorstränge 212 und 214, abzuflachen. Somit tragen diese R/C-Glieder zum Verlangsamen des Abschaltens der MOSFETs 216 und 218 bei. Hierdurch kann in der beispielhaften Schaltung 300 im Zwischenkreis beispielsweise anstelle eines Elkos ein im 100 nF-Bereich liegender Keramikkondensator 301 (Kerko) verwendet werden. Insbesondere kann der Kerko 301 mit einem SMD-Keramikkondensator realisiert werden, um eine Realisierung der Steuerschaltung 150 auf einer Voll-SMD-Leiterplatte, deren Bestückung komplett im Reflow-Lötprozess erfolgen soll, zu ermöglichen. Darüber hinaus wird durch das verlangsamte Abschalten der MOSFETs 216 und 218 die elektro-magnetische Verträglichkeit weiter verbessert, und ein entsprechendes Motorgeräusch bzw. Körperschallgeräusch wird zusätzlich reduziert.

Gemäß einer bevorzugten Ausführungsform können die Kommutierungssignale OUT_1 und OUT_2 in der beispielhaften Schaltung 300 mit den NPN-Bipolartransistoren 324 und 328 auf Masse (GND) gezogen werden. Hierzu können die NPN-Bipolartransistoren 324 und 328 durch ein entsprechendes Steuersignal CTRL von dem Operationsverstärker 270 leitend geschaltet werden. Dieses Steuersignal CTRL wird der Basis jedes NPN-Bipolartransistors 324 und 328 über eine durch die Dioden 342 und 344 gebildete Diodenmatrix zugeführt. Dadurch, dass die NPN-Bipolartransistoren 324 und 328 leitend geschaltet werden, werden die Kommutierungssignale OUT_1 und OUT_2 auf Masse gezogen. Hierbei können die Kommutierungssignale OUT_1 und OUT_2 getaktet auf Masse gezogen werden, wobei die Taktung z.B. mit einer Frequenz von ca. 1 kHz erfolgen kann. Die Frequenz von ca. 1 kHz für die Taktung ist aus thermischen Gründen vorteilhaft. Um die durch die Taktung auftretenden Geräusche zu verringern, ist ggf. auch eine andere Frequenz vorteilhaft. Dadurch, dass die Kommutierungssignale OUT_1 und OUT_2 auf Masse gezogen werden, werden die MOSFETs 216 und 218 sperrend geschaltet, was wiederum eine Begrenzung der Wicklungsströme in den Motorsträngen 212 und 214 bewirkt.

Die Diode 336, welche zwischen den Transistoren 324, 328 und Masse GND angeordnet ist, gleicht im Falle des Leitens eines Endstufenschalters 216, 218 den Potentialunterschied zu dem Potential an der Anode der Fußpunktdiode 240 aus, indem an der Diode 336 eine ähnliche bzw. die gleiche Spannung abfällt wie an der Diode 240. Außerdem verhindert die Diode 336 bei einer Falschpolung einen Stromrückfluss in die Schaltung.

Zur Erzeugung des Steuersignals CTRL vergleicht der Operationsverstärker 270 die Motorstromführungsgröße I, welche von dem Knotenpunkt 290 über den Widerstand 358 dem nicht-invertierenden Eingang des Operationsverstärkers 270 zugeführt wird, mit dem Motorstromgrenzwert I_MAX. Der Motorstromgrenzwert I_MAX wird von dem Motorstromgrenzwertgeber 160 zugeführt, welcher mit den Widerständen 362, 366 und 368 und der Zenerdiode 372 realisiert wird.

Anhand der Fig. 3 wird nochmals das Prinzip erläutert. Der Freilaufstrom 502, 502', 502" ist für den Fall eingezeichnet, dass der Transistor 216 nichtleitend geschaltet ist und das Potential am Gate-Anschluss des Transistors 218 durch die Strombegrenzungs-Steuerschaltung 150 nach Masse GND gezogen wird. In diesem Fall fließt der Freilaufstrom 502, 502', 502" über den Freilaufkreis, der sich aus dem noch leitenden Transistor 218, dem nichtleitenden Transistor 216 mit der Freilaufdiode 222 und den Wicklungssträngen 212 und 214 zusammensetzt. Durch die transformatorische Kopplung der Wicklungsstränge 212 und 214 sinkt bei einer aktivierten Strombegrenzungs-Steuerschaltung 150 das Potential an der einen Wicklung, wenn das Potential an der anderen Wicklung steigt, bzw. umgekehrt. In diesem Zustand folgen die Source-Anschlüsse beider Transistoren 216, 218 dem negativen Potential des Drain-Anschlusses des bereits nichtleitenden Transistors 216. Das Potential des Drain-Anschlusses des Transistors 218 steigt dagegen auf 2 * Vcc bzw. auf die doppelte Betriebsspannung. Dabei verhindert die Fußpunktdiode 240, dass ein Strom 500 in den Zwischenkreis zurückfließt, so dass keine Zwischenkreisüberhöhung, also eine Erhöhung der Betriebsspannung bzw. der Spannung Vcc auftreten kann. Somit ist nur ein kleiner Zwischenkreiskondensator (Elektrolytkondensator) notwendig bzw. es kann komplett auf einen Zwischenkreiskondensator verzichtet werden. Dadurch, dass das Potential am Punkt 220 wegen der Fußpunktdiode 240 negativ werden kann bzw. und in diesem Zustand auch wird, bewirkt die Aktivierung der Strombegrenzungs-Steuerschaltung 150 nicht sofort ein Abschalten des Transistors 218. Durch die Fußpunktdiode 240 wird die Energie vollständig in den Wicklungssträngen 212, 214 und der Endstufe 122 abgebaut.

Auf die gleiche Art wird die Energie in den Wicklungssträngen 212, 214 und der Endstufe 122 abgebaut, wenn der Transistor 218 nichtleitend ist und die Strombegrenzungs-Steuerschaltung 150 aktiviert wird.

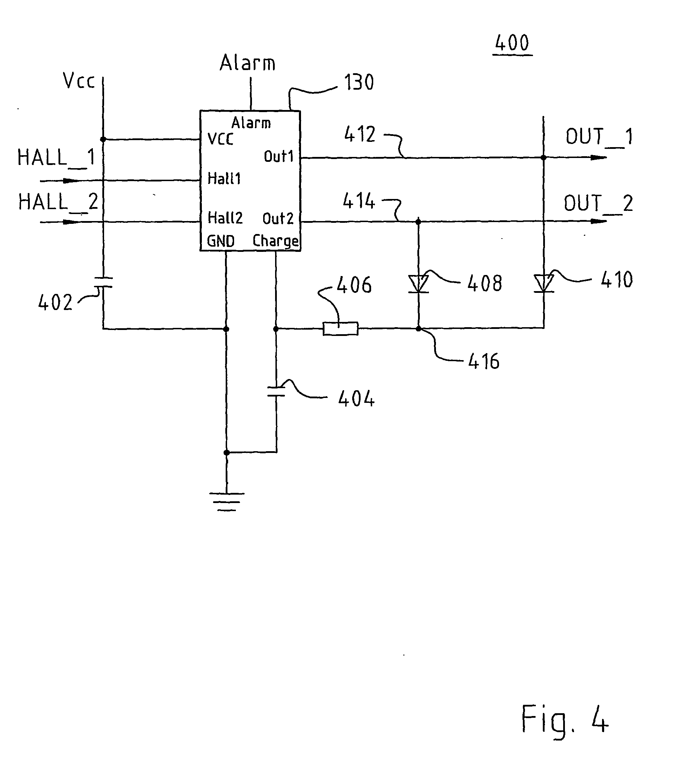

**Fig. 4** zeigt ein vereinfachtes Schaltbild einer beispielhaften Schaltung 200, mit welcher eine Beschaltung der Steuerung 130 zur Kommutierung des ECM 120 von Fig. 1 gemäß einer Ausführungsform der vorliegenden Erfindung realisiert wird. In der beispielhaften Schaltung 400 wird die Steuerung 130 illustrativ mit einem Kommutierungs-IC realisiert. Dem Kommutierungs-IC 130 werden als Eingangssignale die Hallsignale HALL_1 und HALL_2 an entsprechenden Eingängen "Hall1" und "Hall2" zugeführt, sowie die Versorgungsspannung Vcc an einem entsprechenden "VCC"-Eingang. Der "VCC"-Eingang ist des Weiteren über einen Kondensator 402 einerseits mit Masse und andererseits mit einem Masse-Eingang "GND" des Kommutierungs-ICs 130 verbunden. An dem Kommutierungs-IC 130 ist des Weiteren ein Eingang "Charge" vorgesehen, welcher über einen Kondensator 404 ebenfalls mit Masse verbunden ist. Ausgangsseitig weist der Kommutierungs-IC 130 "Alarm"-, "Out1"- und "Out2"-Ausgänge auf, an welchen die Signale Alarm, OUT_1 und OUT_2 bereitgestellt werden. Illustrativ ist das Signal OUT_1 über eine Leitung 412 abgreifbar, welche ebenfalls mit der Anodenseite einer Diode 410 verbunden ist. Das Signal OUT_2 ist über eine Leitung 414 abgreifbar, welche mit der Anodenseite einer Diode 408 verbunden ist. Die Kathodenseiten der Dioden 408 und 410 sind mit einem Knotenpunkt 416 verbunden. Der Knotenpunkt 416 ist des Weiteren über einen Widerstand 406 mit dem Eingang "Charge" des Kommutierungs-ICs 130 sowie dem Kondensator 404 verbunden.

Im Betrieb der beispielhaften Schaltung 400 erfolgt die Stromversorgung des Kommutierungs-ICs 130 mit der Versorgungsspannung Vcc. Der Kommutierungs-IC 130 erzeugt auf Grundlage der Hallsignale HALL_1 und HALL_2 die Kommutierungssignale OUT_1 und OUT_2, sowie das Alarmsignal Alarm.

Naturgemäß sind im Rahmen der vorliegenden Erfindung vielfache Abwandlungen und Modifikationen möglich.

## Patentansprüche

1. Elektronisch kommutierter Motor mit einer Steuerschaltung, welcher Motor aufweist:
Einen Stator, welcher einen ersten Wicklungsstrang (214) und einen zweiten Wicklungsstrang (216) aufweist;
einen permanentmagnetischen Rotor (121);
einen ersten Anschluss (Vcc) zum Anschließen des Motors an einen ersten Pol einer Gleichstromquelle (110) und einen zweiten Anschluss (204) zum Anschließen des Motors an einen zweiten Pol der Gleichstromquelle (110); einen Rotorstellungssensor (140) zur Erzeugung eines von der Drehstellung des permanentmagnetischen Rotors (121) abhängigen Steuersignals (HALL_1, HALL_2); **dadurch gekennzeichnet, dass**
in Reihe mit dem ersten Wicklungsstrang (212) ein erster mit einer Freilaufdiode (222) versehener Feldeffekttransistor (216) vorgesehen ist, der in Abhängigkeit von einem Kommutierungssignal (OUT_2) an seiner Steuerelektrode einen Strom steuert, der im Betrieb von einem der beiden Anschlüsse über den ersten Wicklungsstrang (212) zum anderen Anschluss (204) fließt,
und in Reihe mit dem zweiten Wicklungsstrang (214) ein zweiter, mit einer Freilaufdiode (224) versehener Feldeffekttransistor (218) vorgesehen ist, der in Abhängigkeit von einem Kommutierungssignal (OUT_1) an seiner Steuerelektrode einen Strom steuert, der im Betrieb von dem einen Anschluss über den zweiten Wicklungsstrang (214) zum anderen Anschluss (204) fließt; wobei für diese Ströme - durch den ersten Wicklungsstrang (212) und den zweiten Wicklungsstrang (214) - eine gemeinsame Fußpunktdiode (240) vorgesehen ist, welche in Reihe mit einem Strommessglied (250) geschaltet ist, so dass an diesem Strommessglied (250) im Betrieb eine vom Motorstrom abhängige Motorstrom-Führungsgröße (I) auftritt; ferner mit einem Kommutierungsglied (132), welches im Betrieb abhängig von dem vom Rotorstellungssensor (140) erzeugten Steuersignal Kommutierungs-signale (OUT_1, OUT_2) für die beiden Feldeffekttransistoren (212, 214) erzeugt; und mit einem Motorstrom-Stellglied (180), welches dazu ausgebildet ist, die Kommutierungssignale zwecks Reduzierung des Motorstroms alternierend aus- und einzuschalten, wenn die Motorstrom-Führungsgröße (I) einen vorgegebenen Motorstrom-Grenzwert (I_MAX) überschreitet.

2. Motor nach Anspruch 1, welcher einen Motorstrom-Grenzwertgeber (160) zur Vorgabe eines veränderbaren Motorstrom-Grenzwerts (I_MAX) aufweist.

3. Motor nach Anspruch 2, bei welchem das Motorstrom-Stellglied (180) einen Komparator (270) aufweist, welcher dazu ausgebildet ist, die Motorstrom-Führungsgröße (I), oder eine daraus abgeleitete Größe, mit dem vorgegebenen Motorstrom-Grenzwert (I_MAX) zu verglichen.

4. Motor nach einem der vorhergehenden Ansprüche, bei welchem das Motorstrom-Stellglied (180) dazu ausgebildet ist, die Kommutierungssignale (OUT_1, OUT_2) bei einer einen vorgegebenen Motorstrom-Grenzwert (I_MAX) überschreitenden Motorstrom-Führungsgröße (I) auf Masse zu ziehen.

5. Motor nach einem der vorhergehenden Ansprüche, bei welchem das alternierende Aus- und Einschalten der Kommutierungssignale mit einer Frequenz von ca. 1 kHz erfolgt.

6. Motor nach einem der vorhergehenden Ansprüche, bei welchem die Fußpunktdiode (240) derart geschaltet ist, dass ein Strom in Richtung vom Strommessglied (250) zu den mindestens zwei Halbleiterschaltern (216, 218) verhindert wird.

7. Motor nach einem der vorhergehenden Ansprüche, bei welchem die mindestens zwei Halbleiterschalter als Feldeffekttransistoren (216, 218) ausgebildet sind, wobei jeweils der Source-Anschluss mit der Fußpunktdiode (240) und der Drain-Anschluss mit einem zugehörigen Wicklungsstrang (212, 214) verbunden sind.

8. Motor nach Anspruch 7, bei welchem zwischen dem Gate-Anschluss und dem Drain-Anschluss jedes der mindestens zwei Feldeffekttransistoren (216, 218) ein R/C-Glied (302, 304, 306, 308) vorgesehen ist, um die Schaltgeschwindigkeit des betreffenden Feldeffekttransistors zu reduzieren.

9. Motor nach einem der vorhergehenden Ansprüche, bei welchem die Kommutierungssignale (OUT_1, OUT_2) bei deren alternierendem Ein- und Ausschalten durch mindestens einen Bipolartransistor (324, 328) mit Masse (GND) verbindbar sind.

10. Motor nach Anspruch 9, bei welchem zwischen dem mindestens einen Bipolartransistor (324, 328) und Masse (GND) eine Diode (336) vorgesehen sind.

11. Motor nach Anspruch 9 oder 10, bei welchem das Motorstrom-Stellglied (180) dazu ausgebildet ist, den mindestens einen Bipolartransistor (324, 328) beim alternierenden Aus- und Einschalten der Kommutierungssignale (OUT_1, OUT_2) leitend zu schalten.

12. Motor nach einem der Ansprüche 9 bis 11, welcher mindestens zwei Bipolartransistoren (324, 328) aufweist, welche über eine Diodenmatrix (342, 344) durch das Motorstrom-Stellglied (180) steuerbar sind.

13. Motor nach einem der vorhergehenden Ansprüche, bei welchem das Strommessglied (170) einen Fußpunktwiderstand (250) aufweist.

14. Motor nach einem der vorhergehenden Ansprüche, welcher mindestens zwei Statorwicklungen (212, 214) aufweist, die transformatorisch gekoppelt sind.

15. Motor nach Anspruch 14, bei welchem die beiden Statorwicklungen (212, 214) bifilar gewickelt sind.

16. Motor nach einem der vorhergehenden Ansprüche, bei welchem im Gleichstrom-Zwischenkreis (202) kein Elektrolytkondensator vorgesehen ist.

17. Motor nach einem der vorhergehenden Ansprüche, bei welchem im Gleichstrom-Zwischenkreis (202) ein Keramikkondensator (301) vorgesehen ist.

18. Motor nach Anspruch 17, bei welchem der Keramikkondensator (301) als SMD-Keramikkondensator ausgebildet ist.

19. Motor nach einem der vorhergehenden Ansprüche, welcher eine Blockierschutzschaltung (262) aufweist, welche bei einer Blockierung des Motors (120) die Kommutierungssignale (OUT_1, OUT_2) auf Masse setzt.

20. Motor nach Anspruch 19, welcher eine Rotorstellungssensoranordnung (140) zur Erzeugung des mindestens einen Rotorstellungssignals (HALL_1, HALL_2) aufweist, welches im Betrieb der Blockierschutzschaltung (262) zugeführt wird, um mittels des Rotorstellungssignals zu ermitteln, ob der Motor (120) blockiert ist.

21. Motor nach einem der vorhergehenden Ansprüche, bei welchem zu jedem der mindestens zwei Halbleiterschalter (216, 218) mindestens eine Freilaufdiode (222, 224) parallel geschaltet ist.

22. Motor nach einem der vorhergehenden Ansprüche, welcher eine Voll-SMD-Leiterplatte aufweist, auf der bis auf die Anschlussleitungen alle elektrischen Bauteile als SMD-Bauteile ausgebildet sind.

23. Motor nach Anspruch 22, bei welchem die Bestückung der Voll-SMD-Leiterplatte komplett im Reflow-Lötprozess erfolgt.

## Claims

1. Electronically commutated motor with a control circuit, said motor having:
a stator, having a first winding phase (214) and a second winding phase (216);
a permanently magnetic rotor (121);
a first connection (Vcc), to connect the motor to a first pole of a direct current source (110), and a second connection (204), to connect the motor to a second pole of the direct current source (110);
a rotor position sensor (140), to generate a control signal (HALL_1, HALL_2) depending on the rotary position of the permanently magnetic rotor (121);
**characterized in that**
in series with the first winding phase (212), a first field effect transistor (216), which is provided with a free-wheeling diode (222), and which, depending on a commutation signal (OUT_2), controls at its control electrode a current which in operation flows from one of the two connections via the first winding phase (212) to the other connection (204), is provided,
and in series with the second winding phase (214), a second field effect transistor (218), which is provided with a free-wheeling diode (224), and which, depending on a commutation signal (OUT_1), controls at its control electrode a current which in operation flows from one connection via the second winding phase (214) to the other connection (204), is provided;
wherein for these currents - through the first winding phase (212) and second winding phase (214) - a common base point diode (240) is provided, and is connected in series to an ammeter element (250), so that at this ammeter element (250), in operation, a motor current reference variable (I), which depends on the motor current, occurs; also with a commutation element (132), which in operation generates commutation signals (OUT_1, OUT_2) for the two field effect transistors (212, 214), depending on the control signal which the rotor position sensor (140) generates; and with a motor current actuator (180), which is designed to switch the commutation signals on and off alternately to reduce the motor current, if the motor current reference variable (I) exceeds a specified motor current limit (I_MAX).

2. Motor according to Claim 1, having a motor current limit transmitter (160) to specify a changeable motor current limit (I_MAX).

3. Motor according to Claim 2, wherein the motor current actuator (180) has a comparator (270), which is designed to compare the motor current reference variable (I), or a variable derived from it, with the specified motor current limit (I_MAX).

4. Motor according to one of the preceding claims,
wherein the motor current actuator (180) is designed to pull the commutation signals (OUT_1, OUT_2) to earth in the case of a motor current reference variable (I) which exceeds a specified motor current limit (I_MAX).

5. Motor according to one of the preceding claims,
wherein the alternating switching on and off of the commutation signals takes place at a frequency of approx. 1 kHz.

6. Motor according to one of the preceding claims,
wherein the base point diode (240) is switched so that a current in the direction from the ammeter element (250) to the at least two semiconductor switches (216, 218) is prevented.

7. Motor according to one of the preceding claims,
wherein the at least two semiconductor switches are in the form of field effect transistors (216, 218), in each case the source connection being connected to the base point diode (240), and the drain connection being connected to an appropriate winding phase (212, 214).

8. Motor according to Claim 7, wherein between the gate connection and the drain connection of each of the at least two field effect transistors (216, 218), an R/C element (302, 304, 306, 308) is provided, to reduce the switching speed of the relevant field effect transistor.

9. Motor according to one of the preceding claims,
wherein the commutation signals (OUT_1, OUT_2), as they are switched on and off alternately, can be connected to earth (GND) by at least one bipolar transistor (324, 328).

10. Motor according to Claim 9, wherein between the at least one bipolar transistor (324, 328) and earth (GND), a diode (336) is provided.

11. Motor according to Claim 9 or 10, wherein the motor current actuator (180) is designed to switch the at least one bipolar transistor (324, 328) to conducting as the commutation signals (OUT_1, OUT_2) are switched on and off alternately.

12. Motor according to one of Claims 9 to 11, having at least two bipolar transistors (324, 328), which can be controlled via a diode matrix (342, 344) by the motor current actuator (180).

13. Motor according to one of the preceding claims,
wherein the ammeter element (170) has a base point resistor (250).

14. Motor according to one of the preceding claims, having at least two stator windings (212, 214), which are coupled transformationally.

15. Motor according to Claim 14, wherein the two stator windings (212, 214) are double-wound.

16. Motor according to one of the preceding claims,
wherein in the direct current intermediate circuit (202), no electrolytic capacitor is provided.

17. Motor according to one of the preceding claims,
wherein in the direct current intermediate circuit (202), a ceramic capacitor (301) is provided.

18. Motor according to Claim 17, wherein the ceramic capacitor (301) is in the form of an SMD ceramic capacitor.

19. Motor according to one of the preceding claims, having a blocking protection circuit (262), which if the motor (120) is blocked, sets the commutation signals (OUT_1, OUT_2) to earth.

20. Motor according to Claim 19, having a rotor position sensor arrangement (140), to generate the at least one rotor position signal (HALL_1, HALL_2), which in operation is fed to the blocking protection circuit (262), to determine by means of the rotor position signal whether the motor (120) is blocked.

21. Motor according to one of the preceding claims,
wherein at least one free-wheeling diode (222, 224) is connected in parallel with each of the at least two semiconductor switches (216, 218).

22. Motor according to one of the preceding claims, having a fully SMD printed circuit board, on which, apart from the connecting lines, all electrical components are in the form of SMD components.

23. Motor according to Claim 22, wherein the fully SMD printed circuit board is populated completely by the reflow solder process.

## Revendications

1. Moteur à commutation électronique avec un circuit de commande, lequel moteur présente :
un stator qui présente une première phase d'enroulement (214) et une deuxième phase d'enroulement (216) ;
un rotor à aimant permanent (121) ;
une première connexion (Vcc) pour connecter le moteur à un premier pôle d'une source de courant continu (110) et une deuxième connexion (204) pour connecter le moteur à un deuxième pôle de la source de courant continu (110) ;
un capteur de position de rotor (140) pour générer un signal de commande (HALL_1, HALL_2) dépendant de la position de rotation du rotor à aimant permanent (121) ;
**caractérisé en ce**
**qu'**il est prévu en série avec la première phase d'enroulement (212) un premier transistor à effet de champ (216) muni d'une diode de roue libre (222), lequel commande en fonction d'un signal de commutation (OUT_2) à son électrode de commande un courant qui, en fonctionnement, circule d'une des deux connexions vers l'autre connexion (204) via la première phase d'enroulement (212),
et **qu'**il est prévu en série avec la deuxième phase d'enroulement (214) un deuxième transistor à effet de champ (218) muni d'une diode de roue libre (224), lequel commande en fonction d'un signal de commutation (OUT_1) à son électrode de commande un courant qui, en fonctionnement, circule d'une des deux connexions vers l'autre connexion (204) via la deuxième phase d'enroulement (214) ;
étant prévue pour ces courants - à travers la première phase d'enroulement (212) et la deuxième phase d'enroulement (214) - une diode de base (240) commune qui est montée en série avec un élément de mesure de courant (250) de sorte qu'il apparaît en fonctionnement à cet élément de mesure de courant (250) une grandeur de référence de courant de moteur (I) dépendante du courant de moteur ; ainsi qu'avec un élément de commutation (132) qui, en fonctionnement, génère en fonction du signal de commande généré par le capteur de position de rotor (140) des signaux de commutation (OUT_1, OUT_2) pour les deux transistors à effet de champ (212, 214) ;
et avec un élément de réglage de courant de moteur (180) qui est conçu pour désactiver et activer de manière alternée les signaux de commutation dans le but de réduire le courant de moteur quand la grandeur de référence de courant de moteur (I) dépasse une valeur limite de courant de moteur (I_MAX) prescrite.

2. Moteur selon la revendication 1, lequel présente un générateur de valeur limite de courant de moteur (160) pour prescrire une valeur limite de courant de moteur (I_MAX) variable.

3. Moteur selon la revendication 2, dans lequel l'élément de réglage de courant de moteur (180) présente un comparateur (270) qui est conçu pour comparer la grandeur de référence de courant de moteur (I) ou une grandeur qui en est dérivée avec la valeur limite de courant de moteur (I_MAX) prescrite.

4. Moteur selon l'une des revendications précédentes, dans lequel l'élément de réglage de courant de moteur (180) est conçu pour mettre à la masse les signaux de commutation (OUT_1, OUT_2) si la grandeur de référence de courant de moteur (I) dépasse une valeur limite de courant de moteur (I_MAX) prescrite.

5. Moteur selon l'une des revendications précédentes, dans lequel la désactivation et l'activation alternée des signaux de commutation a lieu à une fréquence d'environ 1 kHz.

6. Moteur selon l'une des revendications précédentes, dans lequel la diode de base (240) est montée de façon à empêcher un courant dans le sens de l'élément de mesure de courant (250) vers lesdits au moins deux commutateurs à semi-conducteurs (216, 218).

7. Moteur selon l'une des revendications précédentes, dans lequel lesdits au moins deux commutateurs à semi-conducteurs sont réalisés sous forme de transistors à effet de champ (216, 218) dont la connexion de source est chaque fois reliée à la diode de base (240) et la connexion de drain à une phase d'enroulement (212, 214) associée.

8. Moteur selon la revendication 7, dans lequel il est prévu un élément R/C (302, 304, 306, 308) entre la connexion de grille et la connexion de drain de chacun desdits au moins deux transistors à effet de champ (216, 218) pour réduire la vitesse de commutation du transistor à effet de champ concerné.

9. Moteur selon l'une des revendications précédentes, dans lequel les signaux de commutation (OUT_1, OUT_2) peuvent être reliés à la masse (GND) par au moins un transistor bipolaire (324, 328) lors de leur activation et désactivation alternée.

10. Moteur selon la revendication 9, dans lequel il est prévu une diode (336) entre ledit au moins un transistor bipolaire (324, 328) et la masse (GND).

11. Moteur selon la revendication 9 ou 10, dans lequel l'élément de réglage de courant de moteur (180) est conçu pour rendre ledit au moins un transistor bipolaire (324, 328) conducteur lors de la désactivation et de l'activation alternée des signaux de commutation (OUT_1, OUT_2).

12. Moteur selon l'une des revendications 9 à 11, lequel présente au moins deux transistors bipolaires (324, 328) qui peuvent être commandés par l'élément de réglage de courant de moteur (180) via une matrice de diodes (342, 344).

13. Moteur selon l'une des revendications précédentes, dans lequel l'élément de mesure de courant (170) présente une résistance de base (250).

14. Moteur selon l'une des revendications précédentes, lequel présente au moins deux enroulements statoriques (212, 214) qui sont couplés par transformateur.

15. Moteur selon la revendication 14, dans lequel les deux enroulements statoriques (212, 214) sont bifilaires.

16. Moteur selon l'une des revendications précédentes, dans lequel il n'est pas prévu de condensateur électrolytique dans le circuit intermédiaire à courant continu (202).

17. Moteur selon l'une des revendications précédentes, dans lequel il est prévu un condensateur céramique (301) dans le circuit intermédiaire à courant continu (202).

18. Moteur selon la revendication 17, dans lequel le condensateur céramique (301) est réalisé sous forme de condensateur céramique pour montage en surface (CMS).

19. Moteur selon l'une des revendications précédentes, lequel présente un circuit de protection contre le blocage (262) qui met les signaux de commutation (OUT_1, OUT_2) à la masse en cas de blocage du moteur (120).

20. Moteur selon la revendication 19, lequel présente un agencement de capteurs de position de rotor (140) pour générer au moins un signal de position de rotor (HALL_1, HALL_2) qui, en fonctionnement, est amené au circuit de protection contre le blocage (262) pour déterminer au moyen du signal de position de rotor si le moteur (120) est bloqué.

21. Moteur selon l'une des revendications précédentes, dans lequel au moins une diode de roue libre (222, 224) est montée en parallèle sur chacun desdits au moins deux commutateurs à semi-conducteurs (216, 218).

22. Moteur selon l'une des revendications précédentes, lequel présente une carte à circuit imprimé entièrement CMS sur laquelle, à l'exception des lignes de connexion, tous les composants électriques sont réalisés sous forme de composants CMS.

23. Moteur selon la revendication 22, dans lequel l'équipement de la carte à circuit imprimé entièrement CMS est réalisé complètement par le procédé de brasage par refusion.
